# EUROPÄISCHE PATENTSCHRIFT

(11) **EP 2 707 234 B1**
(45) Veröffentlichungstag und Bekanntmachung des Hinweises auf die Patenterteilung: **28.01.2015**
(21) Anmeldenummer: 12716049.7
(22) Anmeldetag: 24.04.2012
(51) Int. Cl.: B60C 23/04

(54) **VERFAHREN ZUR ECHTZEIT-KONTROLLE DES REIFENDRUCKS**
METHOD FOR CHECKING TYRE PRESSURE IN REAL TIME
PROCÉDÉ DE CONTRÔLE EN TEMPS RÉEL DE LA PRESSION DE GONFLAGE D'UN PNEU

(30) Priorität: 13.05.2011 DE 102011075830
(43) Veröffentlichungstag der Anmeldung: 19.03.2014
(73) Patentinhaber: Bayerische Motoren Werke Aktiengesellschaft, 80809 München (DE)
(72) Erfinder: SCHWAB, Axel, 80538 München (DE); HARTMANN, Jochen, 86415 Mering (DE)
(86) Internationale Anmeldenummer: PCT/EP2012/057486
(87) Internationale Veröffentlichungsnummer: WO 2012/156182

(56) Entgegenhaltungen:
- WO-A1-94/06640
- JP-A- 2006 151 003
- US-B1- 6 271 748

## Beschreibung

Die Erfindung betrifft ein Verfahren zur Echtzeit-Kontrolle des Reifendrucks an einem Kraftfahrzeug, wobei die mittels eines im Reifen vorgesehenen Drucksensors ermittelten Druckwerte von einer Radelektronikeinheit ohne Einsatz eines fahrzeugfesten Triggersenders funktechnisch zumindest bei nicht bewegtem Fahrzeug nur dann, wenn diese außerhalb eines vorgegebenen Normalbereichs liegen, in kurzen Sendeintervallen an eine im Fahrzeug installierte Überwachungseinheit übertragen werden. Zum Stand der Technik wird neben der DE 102 13 266 A1 auf die US 6 271 748 B1, auf die WO 94/06640 A1 und die JP 2006 151 003 A verwiesen.

Heute kommen in Personenkraftwagen bereits Systeme zur Überwachung des Luftdrucks in den Fahrzeug-Reifen zum Einsatz, die den Druck im Reifen messen und telemetrisch, d.h. via Funk an eine im Fahrzeug installierte Überwachungseinheit übermitteln. Die heute hierfür verwendete Radelektronikeinheit ist ausgelegt, bei Bewegung des Fahrzeugs mit einer Geschwindigkeit oberhalb eines Schwellwerts von bspw. 15 km/h, die mittels eines in der Radelektronikeinheit integrierten Beschleunigungssensors feststellbar ist, in kurzen zeitlichen Abständen jeweils ein sog. Telegramm zu senden, welches üblicherweise Angaben über den Sender, nämlich die sog. Identifikationsnummer und weiterhin die aktuellen Werte für den Druck und die Temperatur der Luft im Reifen enthält, wofür üblicherweise eine Sendedauer in der Größenordnung von 5 Millisekunden bis 20 Millisekunden benötigt wird. Die in den Radelektronikeinheiten integrierten elektrischen Batterien sind dabei ausgelegt, über einen Zeitraum von circa 10 Jahren die hierfür benötigte elektrische Energie bereit zu stellen.

Zeitlich bevor die im vorhergehenden Absatz beschriebenen Radelektronikeinheiten zum Einsatz kamen, wurden solche im Reifen installierte Überwachungseinheiten verwendet, die erst nach Empfang eines Triggersignals, welches von einer fahrzeugfest nahe des jeweiligen Reifens installierten Sendeeinheit ausgesandt wurde, die gemessenen Druckwerte an eine fahrzeugfest installierte Überwachungseinheit übermittelten.

In verschiedenen Ländern besteht die gesetzliche Forderung, den Luftdruck im Reifen sofort mit einer Inbetriebnahme des Fahrzeugs zu überwachen und bei Erkennen eines unzulässigen Reifen-Drucks den Fahrer hierauf hinzuweisen, ohne dass das Fahrzeug hierfür in Bewegung gesetzt wird. Da somit auch im Fahrzeug-Stillstand eine Drucküberwachung erfolgen muss, kann das heute verwendete oben kurz beschriebene System also nicht verwendet werden. Zwar könnte dieses System so abgeändert werden, dass die gemessenen Reifen-Druckwerte kontinuierlich, d.h. auch bei Stillstand des Fahrzeugs und insbesondere auch dann, wenn das Fahrzeug überhaupt nicht in Betrieb genommen ist, an die Überwachungseinheit gesendet werden, jedoch kann dann die geforderte Lebensdauer der die Radelektronikeinheit versorgenden Batterien von ca. 10 Jahren bei weitem nicht erreicht werden. Weiterhin (eher theoretisch) könnte auf das bereits erwähnte frühere System mit dem Trigger-Sender zurückgegriffen werden, mit welchem der Radelektronikeinheit implizit eine Inbetriebnahme des Fahrzeugs mitgeteilt werden kann, indem nur bei in Betrieb genommenem Fahrzeug entsprechende Trigger-Signale ausgesendet werden und die Radelektronikeinheit als Folge hiervon erheblich seltener tätig werden müsste (und somit erheblich weniger elektrische Energie benötigte), jedoch stellte dies einen relativ hohen Aufwand dar.

In der eingangs genannten US 6 271 748 B1 ist ein Verfahren nach dem Oberbegriff des Anspruchs 1 bekannt, jedoch befasst sich diese Schrift weder mit der vorgehend geschilderten Problematik noch schlägt diese Schrift eine Lösung für diese Problematik vor. In den weiterhin genannten Schriften WO 94/06640 A1 und JP 2006 151 003 A ist für Reifendrucküberwachungssysteme eine Signalübertragung im Mikrosekundenbereich offenbart.

Aus der eingangs genannten DE 102 13 266 A1 ist es weiterhin bekannt, zumindest einen Teil der erfassten Reifendruckmesswerte mit einer veränderlichen Häufigkeit zu einer Empfangseinheit, vorliegend Überwachungseinheit genannt, zu übertragen, wobei die Häufigkeit der Übertragung der Reifendruckmesswerte von den erfassten Reifendruckmesswerten selbst abgeleitet wird. Dabei können durchaus nicht sämtliche erfassten Messwerte von der im Reifen bzw. Rad des Fahrzeugs installierten Sendeeinheit übertragen werden, solange sich die erfassten Reifendruck-Messwerte in einem Normalbereich befinden. Hiermit kann der Energiebedarf der Sendeeinheit bereits erheblich reduziert werden, jedoch hat sich gezeigt, dass es mit einer sinnvollen und die gewünschte Batterie-Lebensdauer gewährleistenden Auslegung dieses bekannten Systems noch nicht möglich ist, nach einer längeren Stillstand-Phase des Fahrzeugs im wesentlichen sofort mit Inbetriebnahme desselben eine gültige Aussage über die Funktionssicherheit des Reifendruck-Überwachungssystems und insbesondere über die Korrektheit des Reifendrucks bzw. gegebenenfalls dessen Fehlerhaftigkeit zu erhalten.

Aufgabe der Erfindung ist es daher, ein Verfahren aufzuzeigen, das unter Verwendung der üblichen elektrischen Batterien geeignet ist, über die geforderte Betriebsdauer von beispielsweise ca. 10 Jahren den Reifendruck in Echtzeit zu überwachen, ohne dass ein fahrzeugfester Triggersender benötigt wird. Unter dem Begriff "Echtzeit-Kontrolle" ist dabei in Verbindung mit einem Reifendruckkontrollsystem ein echtzeitfähiges Reifendruckkontrollsystem zu verstehen, welches in einigen Ländern künftig gesetzlich vorgeschrieben wird, und durch welches Warnungen betreffend einen Reifen-Überdruck oder einen Reifen-Unterdruck oder einen Systemausfall dem Fahrer oder Nutzer des Fahrzeugs innerhalb von wenigen Sekunden angezeigt werden. Dabei ist auch gefordert, dass dem Fahrer eine sehr schnelle Anzeige eines Systemausfalls oder eines ungenügenden Luftdrucks in einem Reifen sofort mit Inbetriebnahme des Fahrzeugs noch im Stand desselben innerhalb von wenigen Sekunden dargeboten wird.

Die Lösung dieser Aufgabe besteht für ein Verfahren nach dem Oberbegriff des Anspruchs 1 darin, dass das für die Systemüberwachung geeignete Signal mit kurzer Sendedauer in der Größenordnung von 25 µs bis 500 µs ausgesendet wird. Vorteilhafte Weiterbildungen sind Inhalt der Unteransprüche.

Um die geforderte Echtzeit-Kontrolle einfach und über viele Jahre ohne einen Austausch der in der Radelektronikeinheit integrierten elektrischen Batterie ermöglichen zu können, wird hiermit vorgeschlagen, die bei einem Reifendruck-Kontrollsystem grundsätzlich notwendigen und in heute üblichen Systemen zusammengefassten Funktionen einer System- und Funkstreckenüberwachung einerseits sowie der Überwachung des Reifendrucks andererseits derart aufzuteilen, dass jede dieser beiden Funktionen unter Erfüllung der genannten Echtzeitanforderungen hinsichtlich des Energieverbrauchs optimiert ist. In diesem Sinne wird quasi kontinuierlich, d.h. nacheinander in kurzen Zeitabständen zumindest ein der Überwachung des Systems und der Funkstrecke dienendes Signal an die im Fahrzeug installierte Überwachungseinheit ausgesandt, während ein den Reifendruck übermittelndes Signal jedenfalls bei Fahrzeug-Stillstand nur dann ausgesandt wird, wenn dieser in irgend einer Weise außerhalb seines vorgegebenen Normalbereichs liegt. Selbstverständlich wird der Druck im Reifen ebenso quasi kontinuierlich gemessen, jedoch werden die Messwerte zumindest bei nicht bewegtem Fahrzeug nur dann ausgesandt, wenn diese abnormal sind. Eine erste Überprüfung, ob die gemessenen Druckwerte im Normalbereich oder außerhalb desselben liegen, wird also erfindungsgemäß zumindest bei nicht bewegtem Fahrzeug in der Radelektronikeinheit selbst durchgeführt.

Der Vorteil dieser Funktions-Aufteilung liegt darin, dass die kurze Aussendung eines System-Überwachungssignals erheblich weniger elektrische Energie benötigt als die aufwändige Aussendung eines einen gemessenen Druckwert und üblicherweise auch einen gemessenen Temperaturwert wiedergebenden oder übertragenden Signals. Da üblicherweise der Zeitrahmen, in dem ein Fahrzeug nicht bewegt wird, signifikant größer ist als der Zeitrahmen, in der dem das Fahrzeug bewegt wird, kann mit dem erfindungsgemäßen Verfahren der Verbrauch von elektrischer Energie in den Radelektronikeinheiten bereits dann erheblich reduziert werden, wenn das vorgeschlagene Verfahren nur bei stillstehendem Fahrzeug durchgeführt wird. Noch weiter reduziert werden kann der Energieverbrauch der Radelektronikeinheiten selbstverständlich, wenn das hier vorgeschlagene Verfahren grundsätzlich, d.h. auch bei bewegtem Fahrzeug durchgeführt wird. Dann werden also auch bei bewegtem Fahrzeug von den Radelektronikeinheit grundsätzlich in kurzen Sendeintervallen Signale ausgesandt, die der Systemüberwachung dienen, während die gemessenen Reifen-Druckwerte (und Temperaturwerte der Luft im Reifen, worauf an späterer Stelle noch näher eingegangen wird) nur dann übertragen werden, wenn die Druckwerte außerhalb eines vorgegebenen Normalbereichs liegen. Ob das Fahrzeug still steht oder bewegt wird kann dabei vorzugsweise wie bislang bereits üblich mittels eines in der Radelektronikeinheit integrierten Beschleunigungssensors festgestellt werden, alternativ jedoch auch mittels anderer hierfür geeigneter Sensoren, so beispielsweise anhand der Verformung des Reifens im sog. Latsch.

Die vorliegende Erfindung macht sich also unter anderem die bereits in der eingangs genannten Schrift niedergeschriebene Erkenntnis zunutze, dass der Großteil der von einer Radelektronikeinheit eines Reifendruck-Kontrollsystems benötigten elektrischen Energie vom Funk-Sender dieser Einheit verbraucht wird, während die eigentlichen Messungen von Druck und üblicherweise auch der Temperatur der Luft im Reifen nur einen Bruchteil dieser für das Senden benötigten Energie verbrauchen. Zusätzlich zu dieser bekannten Tatsache wird vorliegend noch hinsichtlich der funktechnisch zu übertragenden Informationen unterschieden. Eine relativ lange und somit energieverzehrende Informationsübertragung wird erfindungsgemäß zumindest bei nicht bewegtem Fahrzeug auf wenige Fälle beschränkt und erfolgt nur dann, wenn eine Abnormalität erkannt wird. Eine zeitlich extrem kurze Informationsübertragung zur Überprüfung der System-Funktion hingegen benötigt sehr wenig Energie und kann bzw. soll daher auch bei nicht bewegtem Fahrzeug regelmäßig und häufig erfolgen. Ein diesbezügliches Signal benötigt nämlich nur eine extrem kurze Sendedauer in der Größenordnung von 25 Mikrosekunden bis 500 Mikrosekunden, je nachdem wie hoch die Anforderung im Hinblick auf die Störanfälligkeit gewählt wird.

Im vorliegenden unabhängigen Patentanspruch 1 ist ausgesagt, dass die mittels eines Drucksensors ermittelten Druckwerte im Reifen zumindest bei nicht bewegtem Fahrzeug nur dann, wenn diese außerhalb eines vorgegebenen Normalbereichs liegen, an die fahrzeugfeste Überwachungseinheit übertragen werden. Selbstverständlich können gegebenenfalls ermittelte Werte für die Temperatur der im Reifen befindlich Luft zusammen mit den übertragenen Druckwerten mit übertragen werden. Bei nicht bewegtem Fahrzeug ist jedoch die Übertragung der Temperaturwerte jedenfalls dann, wenn das Fahrzeug bereits über einen längeren Zeitraum still gestanden ist, nicht erforderlich. Hat sich jedoch die Temperatur der Luft im Reifen als Folge einer längeren und/oder schnelleren Fahrt des Fahrzeugs erhöht, was bekanntlich eine Druckerhöhung im Reifen zur Folge hat, so sollte auch die Luft-Temperatur im Reifen berücksichtigt werden, da nur hiermit eine gültige Aussage, ob im Reifen ein unzulässig hoher Druck vorliegt, getroffen werden kann. Diese entsprechende Abschätzung kann aber wie bereits bisher auch unter Anwendung des erfindungsgemäßen Verfahrens in der fahrzeugfesten Überwachungseinheit durchgeführt werden. Wesentlich ist nämlich nur, dass mit einer Inbetriebnahme des Fahrzeugs, bei welcher üblicherweise die Luft im Reifen aufgrund des vorangegangenen Fahrzeug-Stillstands nicht signifikant wärmer als die Umgebungstemperatur ist, in einem ersten Schritt überprüft wird, ob ein unzulässig niedriger Druck im Reifen vorliegt. In diesem Sinne ist der im Patentanspruch 1 verwendete Begriff "außerhalb eines vorgegebenen Normalbereichs" zu verstehen. Zwingend muss in diesem Sinne also nur überprüft werden, ob der gemessene Druck im Reifen unterhalb eines vorgegebenen Grenzwertes liegt, vorzugsweise zusätzlich, ob ein zeitlicher Druckabfall vorliegt, der größer als ein vorgegebener Grenzwert für eine Druckänderung ist.

An dieser Stelle sei nochmal wiederholt, dass die Messung des Reifen-Drucks bei stillstehendem Fahrzeug in kurzen Zeitintervallen quasi kontinuierlich durchgeführt wird, während eine Übermittlung eines festgestellten Druckwertes an die fahrzeugfeste Überwachungseinheit zumindest bei stillstehendem Fahrzeug nur dann erfolgt, wenn der festgestellte Druckwert unterhalb eines vorgegebenen Grenzwertes und somit außerhalb eines vorgegebenen Normalbereichs liegt. Die fahrzeugfeste Überwachungseinheit kann die entsprechende Information ebenso quasi kontinuierlich empfangen oder es kann die fahrzeugfeste Überwachungseinheit erst mit einer Inbetriebnahme des Fahrzeugs in Betrieb genommen werden, woraufhin sie erst das nächstfolgende Sende-Telegramm der Radelektronikeinheit empfängt, aber dann immer noch rechtzeitig über einen gegebenenfalls eingetretenen Druckverlust im Reifen informieren kann.

Es kann jedoch in der Radelektronikeinheit nicht nur überprüft werden, ob der gemessene Luftdruck im Reifen unterhalb eines vorgegebenen Grenzwertes und somit außerhalb eines vorgegebenen Normalbereichs liegt, und/oder ob zeitlich betrachtet ein Druckabfall feststellbar ist, der größer als ein (im Sinne eines Normalbereichs) vorgegebener Grenzwert ist, sondern es kann gleichzeitig auch überprüft werden, ob ein unzulässig hoher Druck im Reifen vorliegt. Dabei können in diesem sogenannten ersten in der Radelektronikeinheit durchgeführten Überprüfungsschritt, in welchem zumindest bei nicht bewegtem Fahrzeug entschieden wird, ob überhaupt ein Druckwert an die fahrzeugfeste Überwachungseinheit übermittelt wird, der Einfachheit halber Temperatureinflüsse außer Acht gelassen werden. Jedoch müssen solche Einflüsse nicht außer Acht gelassen werden.

Im Sinne des vorhergehenden Absatzes wird (gemäß Anspruch 9) vorgeschlagen, dass von der Radelektronikeinheit zumindest bei nicht bewegtem Fahrzeug nur Druckwerte, die unterhalb eines Grenzwertes für den teilbeladenen Kaltfülldruck des Reifens oder oberhalb eines Grenzwertes für den vollbeladenen Kaltfülldruck des Reifens liegen oder die oberhalb eines Grenzwertes für einen über einen gewissen Zeitraum festgestellten Druckabfall im Reifen liegen, funktechnisch übermittelt werden. Der vollbeladene Kaltfülldruck des Reifens ist dabei derjenige Luft-Druck im Reifen bei einer der Umgebungstemperatur entsprechenden Luft-Temperatur, wenn der Reifen mit seinem Maximaldruck befüllt ist, während der teilbeladene Kaltfülldruck ein wie üblich aus Komfortgründen um ein geeignetes Maß abgesenkter Reifenfülldruck ist. Der genannte Grenzwert für den teilbeladenen Kaltfülldruck kann dabei beispielsweise bei 75% des teilbeladenen Kaltfülldrucks liegen und der Grenzwert für den vollbeladenen Kaltfülldruck kann beispielsweise 125% des vollbeladenen Kaltfülldrucks betragen. Ein Beispiels-Grenzwert für einen zeitlich schnellen Druckabfall im Reifen, auf welchen hin vorzugsweise ebenfalls in der Radelektronikeinheit eine Überwachung durchgeführt wird, kann ein Wert von 0,3 bar/Minute sein. Aus Berechnungen ergibt sich, dass die bestimmten Zeitabstände, mit oder in denen die Radelektronikeinheit auch bei Fahrzeug-Stillstand (und somit auch dann wenn das Fahrzeug abgestellt und nicht in Betrieb ist) kurze Telegramme mit einer Sendedauer in der Größenordnung von 25 µs bis 500 µs sendet, die ein der Systemüberwachung dienendes Signal enthalten, in der Größenordnung von 4 Sekunden bis 10 Sekunden liegen können, um die wesentlichen eingangs genannten Anforderungen zu erfüllen (Anspruch 2). Dabei kann die Radelektronikeinheit entweder in einem festen Zeitraster in diesem oder einem anderen Zeitbereich senden oder es kann die Radelektronikeinheit in einem variablen Zeitraster senden, wobei der Zeitabstand zwischen zwei Aussendungen beispielsweise in einem Bereich von 4,4 s bis 5,6 s liegt. In vorteilhafter Weise kann dabei der Zeitabstand zwischen zwei Aussendungen in Abhängigkeit von der Identifikationsnummer (ID-Nummer) der Radelektronikeinheit oder von einem Auszug aus dieser ID-Nummer fortlaufend variiert werden, wodurch die Radelektronikeinheit quasi über mehrere Aussendungen verteilt die ID-Nummer bzw. einen Teil davon an die fahrzeugfeste Überwachungseinheit überträgt. Da dieser Überwachungseinheit die ID-Nummern der am Fahrzeug verbauten Radelektronikeinheiten bekannt sind, können anhand der Zeitabstände zwischen den einzelnen Signalen die "eigenen" Radelektronik-Einheiten von denen anderer Fahrzeug sicher unterschieden werden. Alternativ kann die Radelektronikeinheit in einem variablen zeitlichen Raster senden, wobei die Differenzzeit zwischen dem aktuellen und dem folgenden nächsten Sendezeitpunkt über einen Zufallsgenerator ermittelt und bevorzugt im aktuellen Telegramm codiert mit übertragen wird (Ansprüche 3, 5).

Vorteilhafterweise kann jedenfalls bei abgestelltem Fahrzeug (dies entspricht "Zündung aus") die fahrzeugseitige Überwachungseinheit aus Stromspar gründen nur in solchen Zeitbereichen aktiviert werden, in denen Funksignale von den eigenen Rädern bzw. Radelektronikeinheiten des Fahrzeugs zu erwarten sind (Anspruch 4). So kann vermieden werden, dass die FahrzeugBatterie bei längerem Stillstand des Fahrzeugs vollständig entleert wird. Es sei jedoch nochmals ausdrücklich darauf hingewiesen, dass die Überwachungseinheit keineswegs auch bei abgestelltem Fahrzeug Signale von den Radelektronikeinheiten empfangen muss um das erfindungsgemäße Verfahren durchführen zu können; vielmehr kann es ausreichend sein, wenn die Überwachungseinheit erst mit einer Inbetriebnahme des Fahrzeugs in Betrieb genommen wird. Auch dann wird die Überwachungseinheit sofort nach Inbetriebnahme Signale von den Radelektronikeinheiten empfangen und damit erkennen können, dass diese zumindest funktionstüchtig sind. Wenn dann mit diesen Signalen der Radelektronikeinheiten kein Druckwert übermittelt wird, so kann davon ausgegangen werden, dass die Fülldrücke aller Reifen des Fahrzeugs im vorgegebenen Normalbereich liegen, so dass kein sicherheitskritischer Zustand vorliegt. Wenn jedoch die fahrzeugfeste Überwachungseinheit auch bei abgestelltem, d.h. nicht in Betrieb genommenem Fahrzeug zumindest zeitweise aktiv ist und somit Signale von den Radelektronikeinheiten empfangen kann, so kann hiermit nicht nur mit noch größerer Sicherheit sofort mit einer Inbetriebnahme des Fahrzeugs dem Fahrzeug-Nutzer gemeldet werden, ob die Druckwerte in den einzelnen Reifen im vorgegebenen Normalbereich oder außerhalb desselben liegen, sondern es kann zusätzlich eine Beschädigungswamung oder Diebstahlwarnung für die Reifen bei abgestelltem Fahrzeug vorgesehen werden. Beispielsweise kann bei stillstehendem und nicht betriebenem Fahrzeug, wenn dieses also auf einem Parkplatz abgestellt ist, im Falle eines an die Überwachungseinheit übermittelten Druckabfalls, der auf einen Reifenstecher hinweist, die Alarmanlage aktiviert oder eine entsprechende Meldung über das Mobilfunknetzwerk abgesetzt werden. Mittels einer Feldstärkeüberwachung der von den Radelektronikeinheiten ausgesendeten Signale kann eine Demontage des Reifens erkannt werden und gleichfalls die Alarmanlage ausgelöst werden.

Nun wird näher auf die Ermittlung und Überprüfung des Reifendrucks in der Radelektronikeinheit eingegangen. Zunächst ist hierfür in dieser Radelektronikeinheit der vorgegebene Normalbereich, d.h. zumindest ein Grenzwert für den Mindest-Druck, der im Reifen vorliegen muss, geeignet einprogrammiert (hierauf wird an späterer Stelle noch näher eingegangen), vorzugsweise jedoch ein durch einen Mindest-Wert und einen Maximal-Wert definierter Bereich, beispielsweise in Form der bereits genannten Grenzwerte für den teilbeladenen und vollbeladenen Kaltfülldruck des Reifens. Zumindest bei nicht bewegtem Fahrzeug, gegebenenfalls auch bei bewegtem Fahrzeug wird der Druck im Reifen in kurzen Zeitintervallen im Zeitbereich von 1 bis 5 Sekunden gemessen. Idealerweise sind diese Mess-Zeitintervalle an die Sendeintervalle der Radelektronikeinheit gekoppelt, derart, dass sich das Zeitraster für die Druckmessung an den Zeitabständen der Aussendung von zumindest für die Systemüberwachung geeigneten Signalen orientiert. Die Druckmessungen können also in einem ganzzahligen Vielfachen oder in einem ganzzahligen Bruchteil der genannten Zeitabstände erfolgen, in denen die Radelektronikeinheit kurze Telegramme aussendet. Vorzugsweise erfolgt doppelt so oft eine Druckmessung als Telegramme ausgesendet werden. Wenn also alle 2 Sekunden ein Telegramm ausgesandt wird, so wird jede Sekunde eine Druckmessung durchgeführt. Falls sich die bestimmten Zeitabstände wie bereits beschrieben beispielsweise anhand der ID-Nummer ändern, so ändert sich die Druckmessrate entsprechend. Die Druckmessrate variiert dann beispielsweise in einem Zeitbereich von 2,2-2,8 Sekunden. Solange die festgestellten Druckwerte innerhalb des vorgegebenen Normallbereichs liegen, so sendet die Radelektronikeinheit regelmäßig und in den genannten kurzen Zeitabständen (= Sendeintervallen) nur das genannte und an späterer Stelle noch näher beschriebene für die Systemüberwachung geeignete Signal, während vollständige Sende-Telegramme, die zusätzlich die ID-Nummer der Radelektronikeinheit sowie den zuletzt gemessenen Druckwert und Temperaturwert enthalten, nur in sehr langen Sendeintervallen, welche typischerweise länger als 5 Minuten sind, ausgesendet werden. Nur falls die Radelektronikeinheit anhand des gemessenen Druckwerts insbesondere einen Unterdruck oder einen schnellen Druckabfall, fakultativ auch einen Überdruck feststellt, so dass also der ermittelte Druckwert außerhalb des vorgegebenen Normalbereichs liegt, sendet die Radelektronikeinheit in den genannten kurzen bestimmten Zeitabständen auch die Druckwerte zusammen mit der ID-Nummer und vorzugsweise ein vollständiges, auch die Temperaturwerte enthaltendes Telegramm.

Nach diesen Erläuterungen zur Druckmessung und Überprüfung wird im weiteren auf das von der Radelektronikeinheit quasi kontinuierlich und somit auch bei stillstehendem Fahrzeug ausgesendete System- und Funkstrecken-Überwachungssignal eingegangen. Für dieses sind je nach Störanfälligkeitsanforderung beispielsweise die folgenden Ausführungsformen möglich: Beispielsweise kann jede Aussendung aus Stromspargründen lediglich aus einem kurzen Trägersignal mit einer Sendedauer im Bereich von circa 25 µs bis 100 µs bestehen. Alternativ können die Radelektronikeinheiten vorzugsweise in einem weniger Energie benötigenden Amplitudenumtastungsmodus (ASK-Modus) ein kurzes und deren Position am Fahrzeug eindeutig kennzeichnendes Bitmuster senden, dessen Sendedauer circa 100 µs bis 500 µs betragen kann. Mögliche Beispiele für ein solche Sendemuster sind für die Radelektronikeinheit vorne links 11010101, für diejenige vorne rechts 10110101, für diejenige hinten links 10101101, und für diejenige hinten rechts 10101011. Ein solches Muster bietet den Vorteil, dass die vier Rad-Positionen des Fahrzeugs im ASK-Modus sicher unterschieden werden können und dass für jede Radposition die Sendedauer einer logischen "1" gleich lang sind, d.h. für die Batterielebensdauer aller vier Rad-Positionen ist kein Unterschied zu erwarten. Dabei kann die jeweilige Radposition entweder beim Verbau in die Radelektronikeinheiten einprogrammiert werden es kommen solche grundsätzlich bekannten Radelektronikeinheiten zum Einsatz, die ihre Position selbstständig ermitteln. Alternativ kann jedes ausgesendete Signal aus der (bereits genannten) ID-Nummer bzw. einer verkürzten ID-Nummer der Radelektronikeinheit bestehen, wobei bevorzugt auch hierfür eine energiesparende Übertragung in einem ASK-Modus gewählt wird.

Gemäß einer Weiterbildung nach Anspruch 3 können die bereits grundsätzlich erläuterten bestimmten Zeitabstände, in denen die Radelektronikeinheiten in kurzen Sendeintervallen zumindest ein für die Systemüberwachung geeignetes Signal senden, von der seit der vorhergehenden Fortbewegung des Fahrzeugs verstrichenen Zeitdauer abhängig sein. So kann nämlich aus Stromspargründen nach langer Standzeit des Fahrzeugs, beispielsweise nach 24 Stunden, in denen das Fahrzeug nicht in Betrieb genommen wurde, in einen zweiten Sende-Modus geschaltet werden, in welchem der Abstand zwischen zwei Aussendungen um einen vorzugsweise ganzzahligen Faktor beispielsweise in der Größenordnung von 10 vergrößert wird. Insbesondere bei derart langen Zeitabständen können jedoch die Toleranzen der freilaufenden RC-Oszillatoren, welche im Sender und im Empfänger im Standby-Betrieb benutzt werden, zu einem Problem führen. Um dieses Problem der unterschiedlichen Zeittoleranzen innerhalb der Taktung zwischen dem in der Radelektronikeinheit lokalisierten Sender und dem in der fahrzeugfesten Überwachungseinheit befindlichen Empfänger zu lösen, kann im Empfänger ein Schätzer implementiert sein, der für jede einzelne Radelektronikeinheit und den Empfänger bzw. die Überwachungseinheit selbst einen Korrekturfaktor bezüglich Zeittoleranz einführt. Gemeinhin kann davon ausgegangen werden, dass sich die Taktung nicht kurzfristig ändert, sondern nur langsam und insbesondere temperaturbedingt driftet. Ein möglicher Ablauf einer solchen Schätzung wird im Folgenden beschrieben:

Nach Abstellen des Fahrzeuges bzw. mit Außerbetriebnahme desselben seien die Radelektronikeinheiten noch für eine bestimme Zeitdauer beispielsweise von 5 Minuten, die aber auch von der Abkühlung des Reifens, d.h. von der Änderung der Lufttemperatur im Reifen abhängig sein kann, vollumfänglich aktiv, was heißt, dass über diesen Zeitraum noch vollständige Telegramme mit Druckwerten und Temperaturwerten im FSK-Modus (= Frequenzumtastungsmodus) ausgesendet werden, die von der fahrzeugfesten Überwachungseinheit auch empfangen werden. Danach sollen die Radelektronikeinheiten mit einem festgelegten und der Überwachungseinheit, d.h. dem Empfänger bekannten Zeitverhalten in den ASK-Modus wechseln und nur noch die beschriebenen kurzen (Funkstrecken)-Überwachungssignale senden. Die Überwachungseinheit sei auch hier noch für eine bestimmte Zeit vollumfänglich aktiv und ermittele während dieser Zeit für jede Radelektronikeinheit einen individuellen Korrekturfaktor zum nominalen Sendetiming. Falls das Sendetiming weiterhin driftet, können für die Schätzung bzw. für einen zu erwartenden Drift auch die von den Radelektronikeinheiten gemessenen Temperaturen (bzw. die Temperaturhistorie) und die fahrzeugseitig zur Verfügung stehende Außentemperatur bzw. die Chiptemperatur des Steuergeräte-Mikrocontrollers herangezogen werden. Sobald die benötigten Werte ermittelt sind, geht der Empfänger selbst für eine bestimmte Zeit in den Standby-Modus, wobei diese Zeit um die maximale Toleranz kürzer sein muss als bis zum nächsten erwarteten von einer Radelektronikeinheit ausgesendeten Signal. Anhand des dann eintreffenden Signals unter Berücksichtigung von dessen individuellem Korrekturfaktor ermittelt daraufhin der Empfänger selbst seinen zeitlichen Korrekturfaktor. Schrittweise kann der Empfänger damit seine Korrektur optimieren und so die notwendige Einschaltzeit weiter reduzieren, was die Energieaufnahme des Empfängers, d.h. der fahrzeugfesten Überwachungseinheit minimiert.

Nun wieder auf die Übermittlung von Druckwerten zurückkommend kann vorgesehen sein, dass zumindest der erste nach einer festgestellten Abweichung des gemessenen Reifen-Drucks vom Normalbereich auszusendende Druckwert oder wenige mehrere auf diesen folgende Druckwerte oder nur eine eine solche Abweichung kennzeichnende Bitfolge in einem Amplitudenumtastungsmodus gesendet wird oder werden, wofür weniger Energie benötigt wird, als wenn die entsprechenden Werte wie üblich in einem Frequenzumtastungsmodus (FSK-Modus) gesendet würden. Beispielsweise kann ein spezielles eine unzulässige Druckabweichung an einem bestimmten Rad des Fahrzeugs signalisierende Bitfolge wie folgt lauten: 11010111. Anschließend hieran können vorzugsweise die bislang üblichen vollständigen Telegramme im FSK-Modus übertragen werden.

Ebenfalls aus Stromspargründen kann vorgesehen sein, dass die Druckmessungen zumindest bei Stillstand des Fahrzeugs zunächst in einem sog. "Spar-Modus", bei welchem die Messgenauigkeit um einen Faktor beispielsweise im Bereich von 2 bis 3 geringer als im normalen Betriebsmodus ist, durchgeführt werden. Bei dieser Messung mit herabgesetzter Messgenauigkeit wird weniger Strom benötigt und es kann trotzdem sicher erkannt werden, dass oder sobald man sich der vorgegebenen Warnschwelle, d.h. einer Grenze des besagten Normalbereichs nähert. Sobald man sich dieser Warnschwelle nähert wird die Messgenauigkeit vorzugsweise in den normalen Betriebsmodus umgeschaltet.

Eine vorteilhafte Vorrichtung zur Durchführung des erfindungsgemäßen Verfahrens kann eine körperlich ausgeführte Logikschaltung anstelle eines im wesentlichen frei programmierbaren Mikrocontrollers enthalten. Eine solche auch State-Machine genannte Logikschaltung zeichnet sich durch verringerten Energiebedarf aus und kann die notwendigen Aktion, wie die Erzeugung einer Sendebitfolge, das Sendetiming, d.h. die Ermittlung der genannten Zeitabstände und das entsprechende Senden der entsprechenden Signale und/oder die kontinuierliche Drucküberwachung und die Erkennung einer Abweichung vom vorgegebenen Normalbereich bei geeigneter Auslegung sicher und einfach ausführen.

Weiterhin kann eine vorteilhafte Vorrichtung zur Durchführung des erfindungsgemäßen Verfahrens zumindest eine geeignete Maßnahme zur Verhinderung einer unerwünschten Manipulation der in der Radelektronikeinheit abgelegten Grenzwerte enthalten. So kann vorgesehen sein, dass die Radelektronikeinheiten nur einmalig innerhalb eines Zeitraums von bspw. 24 Stunden nach ihrer ersten Aktivierung über deren LF-Schnittstelle mit entsprechenden den Normalbereich darstellenden Druckwerten beschrieben werden können. Alternativ kann vorgesehen sein, dass die Radelektronikeinheiten nur beschrieben werden können, während sie mit einer bestimmten Geschwindigkeit rotieren, welche der beim Auswuchten des Reifens bzw. des mit dem Reifen versehenen Fahrzeug-Rads verwendeten Geschwindigkeit entspricht, so dass also die Programmierung der Druckwerte nur beim Auswuchten durchgeführt werden kann. Alternativ kann vorgesehen sein, dass die Radelektronikeinheiten nur über elektrische Kontakte an deren Gehäuse mit den Druckwerten beschrieben werden können. Alternativ können die Radelektroniken nur über deren LF-Schnittstelle mit Druckwerten beschrieben werden, während sie in einer bestimmten Vorrichtung liegen, welche die Radelektronikeinheiten mit einem genau definierten Druck bspw. im Wertebereich von 4,0 - 6,5 bar beaufschlagt. Alternativ können die Radelektronikeinheiten nach deren Aktivierung über die eingefüllten Druckwerte selbsttätig programmiert werden. Zusätzlich zu den beispielhaft genannten Maßnahmen kann eine bestimmte LF-Mindestfeldstärke gefordert sein.

Ein besonderer Vorteil des erfindungsgemäßen Verfahrens ist, dass hiernmit die derzeit fahrzeugseitig verbauten Übenrvachungseinheiten weiterhin verwenden werden können, so dass für solche Länder, welche echtzeitfähige Reifendruckkontrollsysteme fordern, lediglich eine spezielle Radelektronikeinheit verbaut werden muss, in welcher dieses Verfahren implementiert ist.

## Patentansprüche

1. Verfahren zur Echtzeit-Kontrolle des Reifendrucks insbesondere an einem Kraftfahrzeug, wobei die mittels eines im Reifen vorgesehenen Drucksensors ermittelten Druckwerte von einer Radelektronikeinheit ohne Einsatz eines fahrzeugfesten Triggersenders funktechnisch zumindest bei nicht bewegtem Fahrzeug nur dann, wenn diese außerhalb eines vorgegebenen Normalbereichs liegen, in kurzen Sendeintervallen an eine im Fahrzeug installierte Überwachungseinheit übertragen werden, wohingegen die Radelektronikeinheit bei nicht bewegtem Fahrzeug in bestimmten Zeitabständen zumindest ein für die Systemüberwachung geeignetes Signal aussendet und unter Verwendung des gleichen Zeitrasters oder eines ganzzahligen Bruchteils oder Vielfachen hiervon eine Messung des Reifendrucks durchführt,
**dadurch gekennzeichnet, dass** das für die Systemüberwachung geeignete Signal mit kurzer Sendedauer in der Größenordnung von 25 µs bis 500 µs ausgesendet wird.

2. Verfahren nach Anspruch 1, wobei die bestimmten Zeitabstände in der Größenordnung von 4 bis 10 Sekunden liegen.

3. Verfahren nach Anspruch 1 oder 2, wobei die bestimmten Zeitabstände von der seit der vorhergehenden Fortbewegung des Fahrzeugs verstrichenen Zeitdauer abhängig sind oder stets variiert werden.

4. Verfahren nach einem der vorangegangenen Ansprüche, wobei die im Fahrzeug installierte Überwachungseinheit nur in Zeitbereichen aktiviert wird, in denen Funksignale von den Rädern des Fahrzeugs zu erwarten sind.

5. Verfahren nach einem der vorangegangenen Ansprüche, wobei die bestimmten Zeitabstände, innerhalb derer ein Systemüberwachungs-Signal ausgesandt wird, in Abhängigkeit von einer Identifikationsnummer der Radelektronikeinheit oder mit einem Zufallswert, der im vorangegangenen Sendetelegramm mit übertragen wird, variiert werden.

6. Verfahren nach einem der vorangegangenen Ansprüche, wobei das Sendetelegramm des Systemüberwachungs-Signals in einem Amplitudenumtastungsmodus gesendet wird und ein die Radposition kennzeichnendes Bitmuster enthält.

7. Verfahren nach einem der vorangegangenen Ansprüche, wobei nach einer längeren Stillstand-Phase des Fahrzeug die bestimmten Zeitabstände ein ganzzahliges Vielfaches derjenigen Zeitabstände sind, die während der Fortbewegung oder einer kürzeren Stillstand-Phase des Fahrzeugs gewählt werden, und dass für eine längere Stillstand-Phase ein Schätzverfahren angewandt wird, um unterschiedliche Zeit-Toleranzen in der Radelektronikeinheit und der Überwachungseinheit abzugleichen.

8. Verfahren nach einem der vorangegangenen Ansprüche, wobei bei stillstehendem Fahrzeug die Druckmessung mit verringerter Messgenauigkeit, die einen verringerten Bedarf an elektrischer Energie hat, durchgeführt wird.

9. Verfahren nach einem der vorangegangenen Ansprüche, wobei nur Druckwerte, die unterhalb eines Grenzwertes für den teilbeladenen Kaltfülldruck oder oberhalb eines Grenzwertes für den vollbeladenen Kaltfülldruck des Reifens oder die oberhalb eines Grenzwertes für einen über einem gewissen Zeitraum festgestellten Druckabfall im Reifen liegen, funktechnisch übermittelt werden.

10. Verfahren nach einem der vorangegangenen Ansprüche, wobei zumindest der erste nach einer festgestellten Abweichung des gemessenen Reifen-Drucks vom Normalbereich auszusendende Druckwert oder wenige mehrere auf diesen folgende Druckwerte oder nur eine eine solche Abweichung kennzeichnende Bitfolge in einem Amplitudenumtastungsmodus gesendet wird.

## Claims

1. A method for checking tyre pressure in real time, more especially on a motor vehicle, wherein the pressure values determined by means of a pressure sensor provided in the tyre are transmitted by radio at short transmitting intervals to a monitoring unit installed in the vehicle by an electronic wheel unit without the use of a trigger transmitter fixed to the vehicle, at least when the vehicle is not moving, only when these values are outside a predetermined normal range, whereas the electronic wheel unit, when the vehicle is not moving, emits at least one signal suitable for system monitoring at specific time intervals and, using the same time frame or an integral fraction or multiple thereof, carries out a measurement of the tyre pressure, **characterised in that** the signal suitable for the system monitoring is emitted with a short transmitting period in the order of magnitude of 25 µs to 500 µs.

2. A method according to claim 1, wherein the specific time intervals are in an order of magnitude of 4 to 10 seconds.

3. A method according to claim 1 or 2, wherein the specific time intervals are dependent on the time period elapsed since prior movement of the vehicle or are constantly varied.

4. A method according to any one of the preceding claims, wherein the monitoring unit installed in the vehicle is activated only during time periods, in which radio signals are to be expected from the wheels of the vehicle.

5. A method according to any one of the preceding claims, wherein specific time intervals, within which a system monitoring signal is emitted, are varied depending on an identification number of the electronic wheel unit or with a random value, which is also transmitted in the prior transmission message.

6. A method according to any one of the preceding claims, wherein the transmission message of the system monitoring signal is transmitted in an amplitude shift keying mode and contains a bit pattern characterising the wheel position.

7. A method according to any one of the preceding claims, wherein after a relatively long stationary phase of the vehicle, the specific time intervals are an integral multiple of the time intervals selected during the movement or a relatively short stationary phase of the vehicle, and in that an estimation method is applied for a relatively long stationary phase in order to compensate different time tolerances in the electronic wheel unit and the monitoring unit.

8. A method according to any one of the preceding claims, wherein, when the vehicle is stationary, the pressure measurement is carried out with reduced measuring precision, which has a reduced electrical energy requirement.

9. A method according to any one of the preceding claims, wherein only pressure values, which are below a limit value for the partially loaded cold-fill pressure or above a limit value for the fully loaded cold-fill pressure of the tyre or which are above a limit value for a pressure drop in the tyre determined over a specific time period, are transmitted by radio.

10. A method according to any one of the preceding claims, wherein at least the first pressure value to be transmitted after an established deviation of the measured tyre pressure from the normal range or a few pressure values following this or only one bit sequence characterising a deviation of this type is transmitted in an amplitude shift keying mode.

## Revendications

1. Procédé de contrôle en temps réel de la pression d'un pneu, en particulier d'un pneu d'un véhicule, selon lequel les valeurs de pression déterminées au moyen d'un capteur de pression monté sur le pneu ne sont transmises dans de courts intervalles d'émission, à une unité de surveillance montée dans le véhicule, par une unité électronique de roue sans intervention d'un émetteur de déclenchement solidaire du véhicule, par technique radio, au moins lorsque le véhicule ne se déplace pas, qu'uniquement lorsque ces valeurs sont situées à l'extérieur d'une plage normale prédéfinie, alors que l'unité électronique de roue émet, lorsque le véhicule ne se déplace pas, dans des intervalles de temps définis, au moins un signal adapté à la surveillance du système, et, effectue une mesure de la pression du pneu en utilisant la même trame chronologique ou une fraction entière ou un multiple entier de celle-ci,
**caractérisé en ce que**
le signal adapté à la surveillance du système est émis avec une faible durée d'émission, de l'ordre de 25 µs à 500 µs.

2. Procédé conforme à la revendication 1, selon lequel les intervalles de temps définis sont de l'ordre de 4 à 10 secondes.

3. Procédé conforme à la revendication 1 ou 2, selon lequel les intervalles de temps définis dépendent de la durée de temps écoulée depuis le déplacement précédent du véhicule ou varient constamment.

4. Procédé conforme à l'une des revendications précédentes, selon lequel l'unité de surveillance montée dans le véhicule n'est activée que dans des plages chronologiques dans lesquelles des signaux radio provenant des roues du véhicule sont attendus.

5. Procédé conforme à l'une des revendications précédentes, selon lequel les intervalles de temps définis dans lesquels un signal de surveillance du système est émis varient en fonction d'un numéro d'identification de l'unité électronique de roue ou avec une valeur aléatoire qui a été transmise dans le télégramme d'émission précédent.

6. Procédé conforme à l'une des revendications précédentes, selon lequel le télégramme d'émission du signal de surveillance du système est émis dans un mode de modulation d'amplitude et renferme une configuration binaire caractérisant la position de la roue.

7. Procédé conforme à l'une des revendications précédentes, selon lequel après une longue phase d'arrêt du véhicule, les intervalles de temps définis sont un multiple entier des intervalles de temps qui sont choisis pendant le déplacement ou une brève phase d'arrêt du véhicule, et, pour une longue phase d'arrêt on utilise un procédé d'estimation pour équilibrer différentes tolérances chronologiques dans l'unité électronique de roue et l'unité de surveillance.

8. Procédé conforme à l'une des revendications précédentes, selon lequel lorsque le véhicule est à l'arrêt la mesure de la pression est effectuée avec une précision de mesure diminuée qui nécessite une énergie électrique diminuée.

9. Procédé conforme à l'une des revendications précédentes, selon lequel on ne transmet par technique radio que des valeurs de pression qui sont situées au-dessous d'une valeur limite pour la pression de remplissage à froid à charge partielle ou au-dessus d'une valeur limite pour la pression de remplissage à froid à pleine charge du pneu, ou qui sont situées au-dessus d'une valeur limite pour une chute de pression dans le pneu déterminée pendant un intervalle de temps donné.

10. Procédé conforme à l'une des revendications précédentes, selon lequel au moins la valeur de pression à émettre après un écart déterminé de la pression du pneu mesurée par rapport à la plage normale, ou, un faible nombre de valeurs de pression suivant celle-ci, ou uniquement une succession de bits caractérisant un tel écart sont émis selon un mode de modulation d'amplitude.
